# EUROPEAN PATENT APPLICATION

(11) **EP 4 285 710 A1**
(43) Date of publication of application: **06.12.2023**
(21) Application number: 22176213.1
(22) Date of filing: 30.05.2022
(51) Int. Cl.: A01D 89/00

(54) **WORK LIGHTS FOR A GRASS PICKUP HEADER**

(71) Applicant: CNH Industrial Belgium N.V., 8210 Zedelgem (BE)
(72) Inventor: Blancke, Jeffrey, 8720 Markegem (BE); Depestel, Bernard, 8730 Beernem (BE); Van Belleghem, Stijn, 9990 Maldegem (BE); Beelaert, Simon, 9991 Adegem (BE)
(74) Representative: CNH Industrial IP Department

(57) **Abstract**

A pickup assembly (2) for an agricultural harvester (1) comprises a pickup assembly frame (200), a pickup unit (10) carried by the pickup assembly frame (200) and configured to pick up crop from a field, a feeding auger (11) configured to receive the crop from the pickup unit (10) and feed the crop towards a crop inlet of the agricultural harvester (1), and a wind guard assembly (220). The wind guard assembly (220) comprises a wind guard frame (225) and a wind guard lifting mechanism coupled to the pickup assembly frame (200) and the wind guard frame (225) and configured for lifting the wind guard frame (225) from an operational configuration to a lifted configuration. The pickup assembly (2) further comprises at least one work light (170), arranged to illuminate an internal area of the pickup assembly (2) underneath the wind guard frame (225) when the wind guard frame (225) is in the lifted configuration.

## Description

### TECHNICAL FIELD

The present invention relates to a pickup assembly for an agricultural harvester, the pickup assembly comprising a pickup assembly frame, a pickup unit carried by the pickup assembly frame and configured to pick up crop from a field, a feeding auger configured to receive the crop from the pickup unit and feed the crop towards a crop inlet of the agricultural harvester, and a wind guard assembly. The wind guard assembly comprises a wind guard frame and a wind guard lifting mechanism coupled to the pickup assembly frame and the wind guard frame and configured for lifting the wind guard frame from an operational configuration to a lifted configuration.

### BACKGROUND

Certain agricultural machines, such as forage harvesters, forage wagons and balers, collect crop material that has been cut from the field. The component of such agricultural machines which gathers the crop material and feeds it further into the machine for processing is generally known as a pickup assembly. A pickup assembly comprises a pickup unit, typically in the form of a pickup drum rotatably mounted on the pickup assembly frame. The pickup drum has radially arranged projecting tines to collect the crop material and propel it upwards, past a guiding element, and then into a feeding auger that moves the crop laterally towards a feed channel through which the crop material is conveyed into the machine for subsequent processing. Such subsequent processing may, for example, involve baling, threshing, chopping, storing and/or depositing. The guiding element is generally referred to as a wind guard, and serves the purposes of restricting the movement of the collected crop material in the forward and upward direction, shielding the crop flow path from wind influence and guiding the crop material efficiently into the feed channel.

The wind guard and the feeding auger may be pivotable, or otherwise movable, relative to the pickup assembly frame to adapt to variations in the amount of crop moving through the pickup assembly. When stones, metal, or other non-crop material is caught up inside the pickup assembly, the auger and/or the pickup drum can be reversed to expel the unwanted object. During this reversal, the wind guard is usually fully or partially lifted to allow the crop and the unwanted object to be expelled from the pickup assembly. When this reversal is not successful, the machine needs to be stopped and the wind guard and feeding auger are raised for allowing the operator to take the unwanted object out by hand.

One problem with this object removal procedure is that it is not always easy to see where exactly in the pickup assembly the unwanted object is caught up, or how it is to be removed easily. It is an aim of the present invention to overcome this disadvantage.

### SUMMARY OF THE INVENTION

According to an aspect of the invention there is provided a pickup assembly for an agricultural harvester, the pickup assembly comprising a pickup assembly frame, a pickup unit carried by the pickup assembly frame and configured to pick up crop from a field, a feeding auger configured to receive the crop from the pickup unit and feed the crop towards a crop inlet of the agricultural harvester, and a wind guard assembly. The wind guard assembly comprises a wind guard frame and a wind guard lifting mechanism coupled to the pickup assembly frame and the wind guard frame and configured for lifting the wind guard frame from an operational configuration to a lifted configuration. The pickup assembly further comprises at least one work light, arranged to illuminate an internal area of the pickup assembly underneath the wind guard frame when the wind guard frame is in the lifted configuration.

When working at night, lighting on the harvester is normally used to allow the operator to observe the field around the harvester and in front of the header or pickup assembly. When raising the wind guard for the removal of an unwanted object from inside the pickup assembly, the wind guard may, however, block the light coming from the harvester, thereby making it difficult for the operator to find and take out the object he wants to remove. To allow the operator to properly inspect the relevant inner areas of the pickup assembly, the at least one work light is provided to illuminate the areas inside the pickup assembly that need to be inspected. Such internal areas may, for example, include an area between the feeding auger and the crop inlet of the harvester, an area between the pickup unit and the feeding auger, or other areas where unwanted objects may be caught up. By specifically illuminating these areas it is thus made easier to remove the unwanted objects.

Optionally, the work light is arranged to illuminate the pickup unit only when the wind guard frame is in its lifted configuration. The work light may, for example, be turned on by a switch that is operated by the lifting of the wind guard frame beyond a certain height. In some embodiments, the pickup assembly may further comprise a lift sensor for detecting when the wind guard frame is lifted to the lifted configuration, and an electronic circuit operatively coupled to the lift sensor and the work light and configured to turn on the work light in dependence of an electric signal from the lift sensor. Alternatively, or additionally, a control algorithm programmed for lifting the wind guard to its lifted configuration comprises a step of turning on the work light. Similarly, the work light may be turned off automatically as soon as the wind guard frame is dropped back to an operational configuration.

The work light may, for example, be mounted to the wind guard assembly. For example, the work light comprises a lighting strip extending along a width of the wind guard assembly. Alternatively, the work light is mounted to the pickup assembly frame.

According to a further aspect of the invention, an agricultural harvester is provided comprising a pickup assembly as described above.

### BRIEF DESCRIPTION OF THE DRAWINGS

Embodiments of the invention will now be described by way of example with reference to the accompanying drawings, in which:
Figure 1 schematically shows a forage harvester with a pickup assembly that may embody one or more of the inventions described herein.
Figure 2 shows a perspective front view of a pickup assembly that may be used with the forage harvester of Figure 1.
Figure 3 shows a perspective rear view of the pickup assembly of Figure 2.
Figure 4 shows a cross section of the pickup assembly of Figures 2 and 3.
Figure 5 shows the same cross section of the pickup assembly as shown in Figure 4, but with the wind guard assembly in a lifted configuration.
Figure 6 shows the same cross section of the pickup assembly as shown in Figures 4 and 5, but with the wind guard assembly in an operational configuration.
Figure 7 shows the same cross section of the pickup assembly as shown in Figure 6, but with the wind guard assembly temporarily raised by a big lump of crop.
Figure 8 shows a close up of a perspective view on the top left-hand side of the pickup assembly.
Figure 9 shows a close up of a different perspective view on the top left-hand side of the pickup assembly.
Figure 10 shows a close up similar to Figure 9, but with the wind guard assembly in a lifted configuration.
Figure 11 shows a close up of a perspective view on the top right-hand side of the pickup assembly.
Figure 12 shows a perspective view on the belt drive for driving the auger.

### DETAILED DESCRIPTION

In the following, a pickup assembly is described in which the above described invention may be advantageously used. In addition to the invention claimed in the appended claims, further improvements may be implemented in the same pickup assembly. It is noted that, while some features of these other improvements may appear essential in the context of those other improvements, it should not be concluded therefrom that such features are essential to the now claimed invention too. Similarly, it may be suggested that a feature essential for the currently claimed invention is merely optional in the context of the other possible improvements, which is not to be interpreted as an attempt to broaden the scope of protection beyond that what is claimed in the appended claims.

The directions up, down, forward, and rearward are herein defined relative to the general orientation and direction of an agricultural harvester and its attached pickup assembly driving over a field and picking up crop.

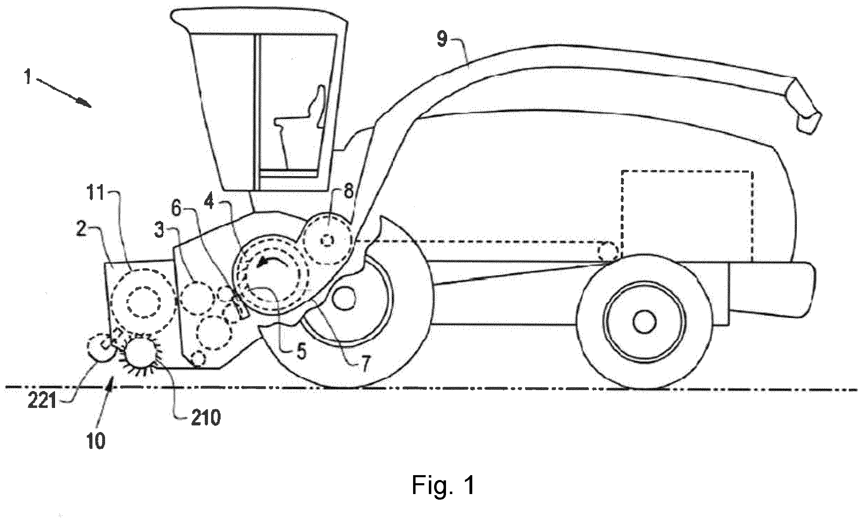

Figure 1 shows a schematic side view of an exemplary embodiment of an agricultural vehicle, illustrated in the form of a forage harvester 1. As the harvester 1 advances through a field, crops, e.g. grass or alfalfa, are gathered by a pickup assembly 2 and transported to a central crop inlet of the forage harvester 1 where they enter the harvester 1 through a set of feed rolls 3. The feed rolls 3 guide the crops in the form of a mat with a given thickness towards the cutting drum 4, which rotates in the direction indicated by the arrow, about a rotation axis that is transversal to the direction of movement of the crops. Knives 5 are mounted on and distributed along the full circumference of the drum 4, so that the knives 5 pass by a stationary shear bar 6 as the drum 4 rotates, thereby chopping the crops into small pieces which are further transported between the cutting drum 4 and a concave 7. The chopped material is then ejected by a blower 8 through a spout 9. It should be appreciated that while the agricultural vehicle is illustrated and described as a forage harvester 1, in some embodiments the pickup assembly may be used in combination with other agricultural vehicles such as a baler, e.g., a large square baler, a small square baler, or a round baler.

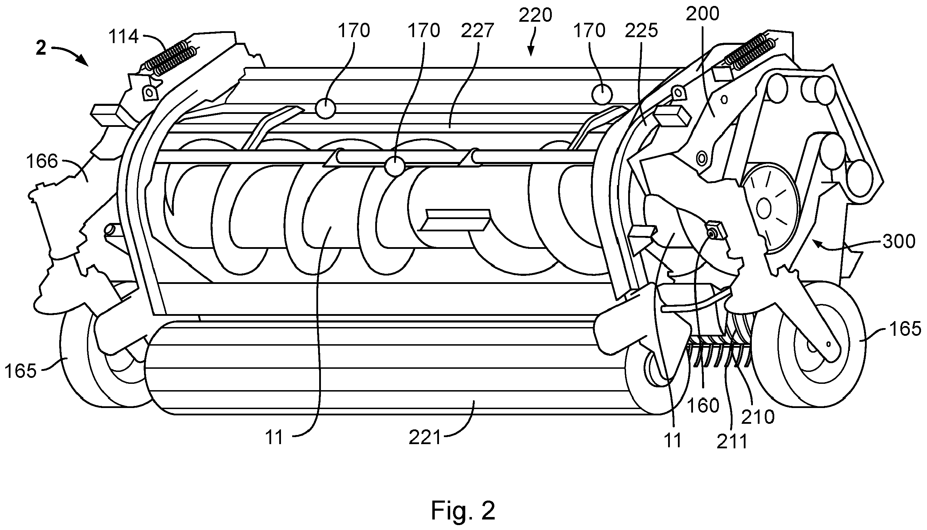

Figures 2 to 12 show various aspects of the pickup assembly 2 in further detail. The pickup assembly 2 comprises a pickup unit 10 that includes a pickup drum 210 that carries a plurality of tines 211. The pickup drum 210 is configured to rotate about a pickup axis that is transverse to the direction of movement of the harvester 1. The rotating tines 211 pick the crop material up from the ground and move it toward a crop material conveyor in the form of a feeding auger 11. The feeding auger 11 conveys the picked up crop material toward an inlet of the harvester 1, or to a central location where a separate conveyor conveys the crop material toward the interior of the harvester 1.

The pickup assembly also includes a wind guard assembly 220. The wind guard assembly 220 may include a cylindrical roller 221, which defines a roller axis about which the roller 221 rotates during operation. Like the pickup axis, the roller axis is generally transverse to the direction of movement of the harvester 1. It should be appreciated that while the roller 221 is illustrated and described as a cylindrical roller 221, the roller 221 can be formed to have other shapes. The roller 221 may be a fixed roller, i.e., a roller that generally maintains a fixed position of the roller axis during operation, or an adjustable roller, i.e., a roller that can be appreciably re-positioned so the roller axis moves to accommodate for variations swath height.

Other wind guard assemblies may, for example, have two rollers to guide crop material towards the crop material conveyor. In such wind guard assemblies, a front roller rolls on top of the swath of crop material as it is being collected while a rear roller is positioned above the tines 211 to guide the crop material toward the crop material conveyor 11 when it is picked up.

The pickup drum 210, feeding auger 11, and wind guard assembly 220 are all carried by a frame 200 of the pickup assembly 2, as may other functional parts of the pickup assembly 2. Typically, the pickup assembly 2 is provided as a separate header that can be mounted to the front of the harvester 1 when needed. Alternatively, the pickup assembly 2 is fixedly attached to a chassis of the forage harvester 1.

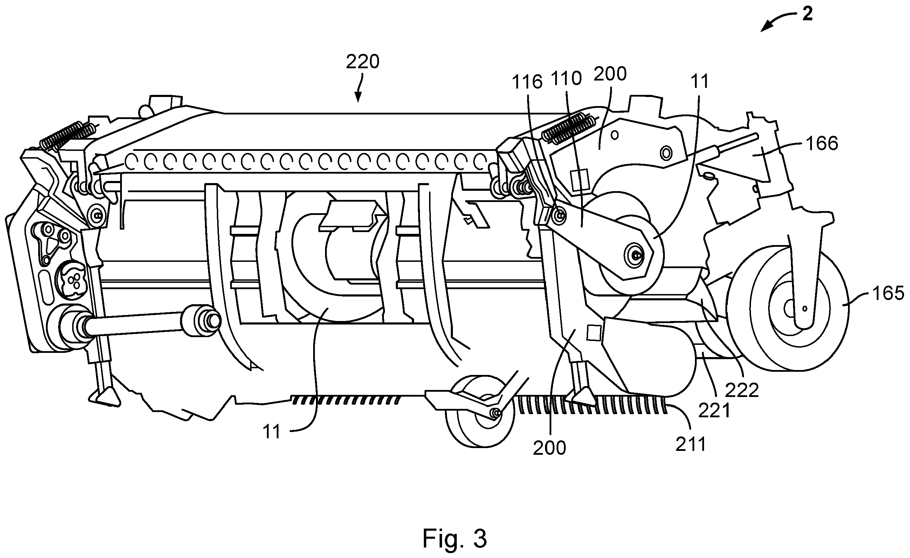

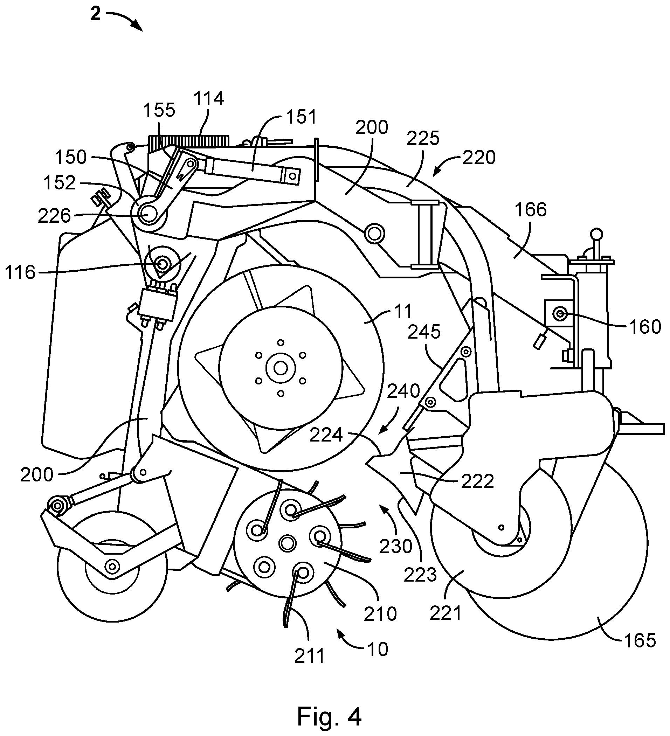

Figure 4 shows a cross section of the pickup assembly 2 of Figures 2 and 3. As the earlier Figures, Figure 4 shows the wind guard roller 221 of the wind guard assembly 220, the pickup drum 210 with its plurality of tines 211, and the feeding auger 11. The wind guard roller 221 is followed by a guidance plate 222. An infeed channel 230 is formed between the wind guard roller 221 and an infeed channel surface 223 of the guidance plate 222 on one side and the pickup drum 210 with its tines 211 on the other side. The geometry of the infeed channel 230 may be adjusted by raising and lowering the wind guard assembly 220, by pivoting or otherwise moving the guidance plate 222 relative to the wind guard frame 225, or by moving the pickup drum 210 relative to the pickup assembly frame 200.

In some crop conditions, the feeding auger 11 may fail to direct all crop received from the pickup unit 10 directly into the crop inlet of the agricultural harvester 1. As a result, a return stream of crop may fall off the feeding auger 11 into the area between the feeding auger 11 and the wind guard assembly 220. In this exemplary embodiment, a return channel 240 is formed between a return channel surface 224 of the guidance plate 222 and the feeding auger 11. A geometry of this return channel 240 is determined by movement of the feeding auger 11 or the wind guard assembly 220 relative to the pickup assembly frame 200, and by movement of the guidance plate 222 relative to the wind guard frame 225. In this embodiment, the guidance plate 222 is mounted to the end of an arm that is pivotably attached to the wind guard frame 225 to pivot around the roller axis of the wind guard roller 221, but other mechanical constructions may be provided for adjusting the position and orientation of the guidance plate 222.

The following technical improvements to the pickup assemblies as have been known before may be implemented separately or in combination.

### Auger lift

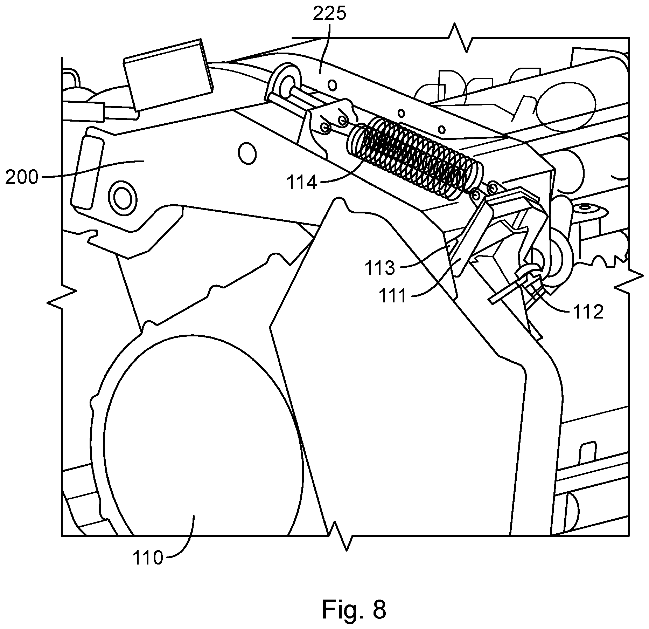

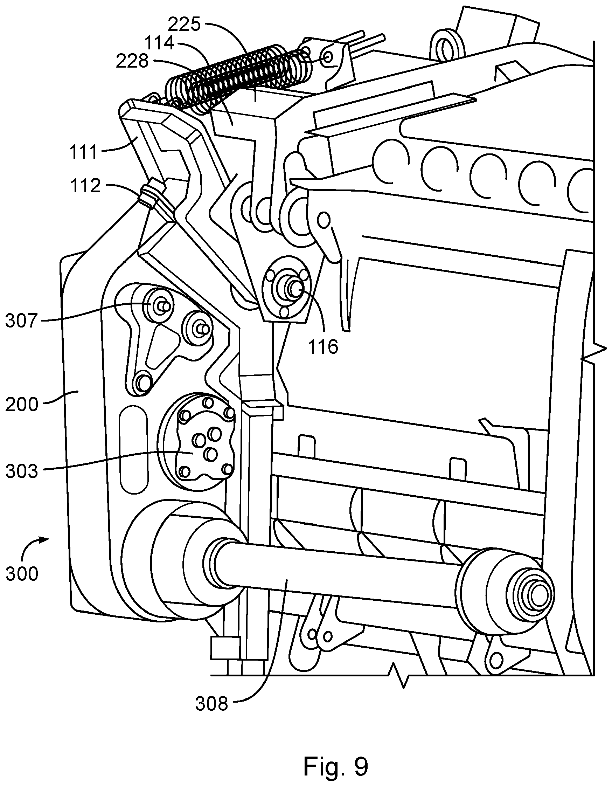

In the pickup assembly 2 of Figures 2 to 12, the wind guard frame assembly 220 is pivotably coupled to the pickup assembly frame 200 at a wind guard pivot axis 226. The feeding auger 11 is rotatably coupled to an auger arm 110 (see, e.g., Figures 8-11), the auger arm 110 is pivotably connected to the pickup assembly frame 200 at an auger pivot axle 116. An auger control arm 111 extends from the auger pivot axle 116 in a direction different from the auger arm 110 and is configured for pivoting together with the auger arm 110. In the embodiment shown here, auger control arms 111 are provided at both ends of the pickup assembly 10. In alternative embodiments, only one of the two auger arms 110 may have an associated auger control arm 111. The auger arms 110 as well as the auger control arms 111 at each side are similar in function but different in design. The main reason for this is that this feeding auger is driven by a drive system 300 (see Figures 9, 10, 12) that is connected to one end of the feeding auger 11 only. In other embodiments, the auger arms 110 and auger control arms 111 at both sides may be more similar.

The auger control arm 111 is configured to provide at least one of the following functions:
limiting a maximum height of the feeding auger 11,
limiting a minimum height of the feeding auger 11,
providing suspension for the feeding auger 11 when pivoting relative to the pickup assembly frame 200, and
lifting the feeding auger 11, together with the wind guard assembly 220.

The auger control arm 111 thus is a functional extension of the traditional auger arm 110 that, for example, obviates the use of a separate lifting mechanism for lifting the feeding auger 11 in the event of an unwanted object being caught up inside the pickup assembly 2. The extending auger control arm 111 further makes it possible to provide the suspension for the auger arm 110 at a convenient location further away from the auger arm 110 and the auger drive 300 that are located in a crowded central area of the pickup assembly 2.

To implement the functionality of limiting the maximum height of the feeding auger 11 the pickup assembly frame 200 may comprise a top stop 112 (see Figures 8-10) for engaging with the auger control arm 111 when the feeding auger 11 is lifted to its maximum height. This height will typically be reached when the wind guard frame 225 and feeding auger 11 are lifted for the removal by hand of a non-crop object, or during service and maintenance operations. During harvesting, this maximum height may be reached when large volumes of crop push the feeding auger 11 upward so far that the auger control arm 111 engages the top stop 112.

To implement the functionality of limiting the minimum height of the feeding auger 11 the pickup assembly frame 200 may comprise a bottom stop 113 (see Figure 8) for engaging with the auger control arm 111 when the feeding auger 11 is dropped to its minimum height. The minimum height will at least be high enough for avoiding the feeding auger 11 coming into contact with the pickup unit 10 and for leaving some space between the pickup unit 10 and the feeding auger 11 through which the crop is pulled in.

Optionally, the pickup assembly 10 frame further comprises at least one actuator (not shown) for moving the top stop 112 and/or the bottom stop 113 relative to the pickup assembly frame 200. This will, for example, allow to adapt the range of movement for the feeding auger 11 in dependence of the type of crop, expected crop volumes, and other external influences. Furthermore, it may allow to use a different maximum height setting during harvesting than for service and maintenance, or when lifting the feeding auger 11 to remove non-crop objects.

To implement the functionality of providing suspension for the feeding auger 11 when pivoting relative to the frame, a tensioning element may connect the auger control arm 111 to the pickup assembly frame 200. In this example, the tensioning element comprises two springs 114 for each auger control arm 111. Alternatively, the tensioning element may, for example, comprise a single spring, a pneumatic cylinder, or a hydraulic cylinder. The tensioning element may be adjustable to allow controlling the suspension. When the tensioning element is connected to an outer end of the auger control arm 111, the counterforce it needs to apply to the auger control arm 111 is smaller than when the suspension if provided closer to the auger pivot axle 116.

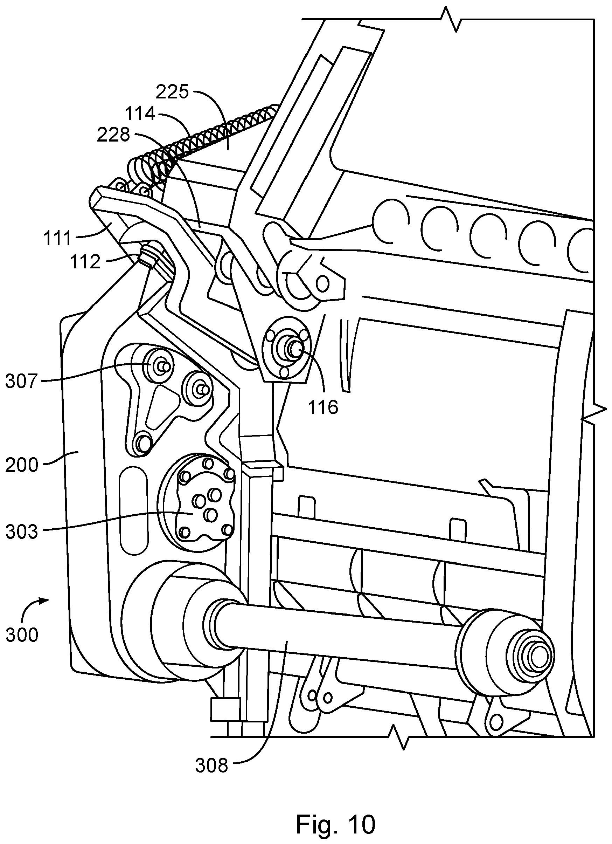

To implement the functionality of lifting the feeding auger 11, together with the wind guard assembly 220, the wind guard frame 225 comprises an auger control arm abutment 228 (see Figures 9 and 10). The auger control arm abutment 228 is configured to abut the auger control arm 111 during a portion of the pivoting motion of the wind guard frame 225 between its dropped configuration and its lifted configuration. In Figure 9, the wind guard frame is in an operational configuration and the auger control arm abutment 228 is not in contact with the auger control arm 111. In the first part of the pivoting motion of the wind guard frame 225, the auger control arm abutment 228 is not yet in contact with the auger control arm 111 and the feeding auger 11 is not moved. As soon as the auger control arm abutment 228 contacts the auger control arm 111, the rising wind guard frame 225 will start pushing the auger control arm 111 rearward/downward and cause the auger arm 110 to pivot forward/upward therewith, into a lifted or fully lifted position as shown in Figure 10. When the wind guard frame 225 is lowered again, the feeding auger 11 may fall down under its own weight and/or due to a spring force exerted on the auger control arm 111 by the springs 114. It is an important advantage of this embodiment that no separate actuators need to be provided for lifting or lowering the feeding auger 11.

In some embodiments, the auger control arm 111 may further comprise a releasable coupling (not shown) for temporarily connecting the auger control arm 111 to the wind guard frame 225. The releasable coupling, when activated, allows the wind guard frame 225 to selectively pull at the auger control arm 111 during at least a portion of its pivoting motion back to its dropped configuration. The releasable coupling may, for example, use an electric actuator for engaging and disengaging the coupling when needed, or some elaborate mechanical cam system may be provided that automatically engages and disengages when the feeding auger 11 is in specific positions. Alternatively, the releasable coupling may comprise an electromagnetic coupling that can be controlled electronically and through control software.

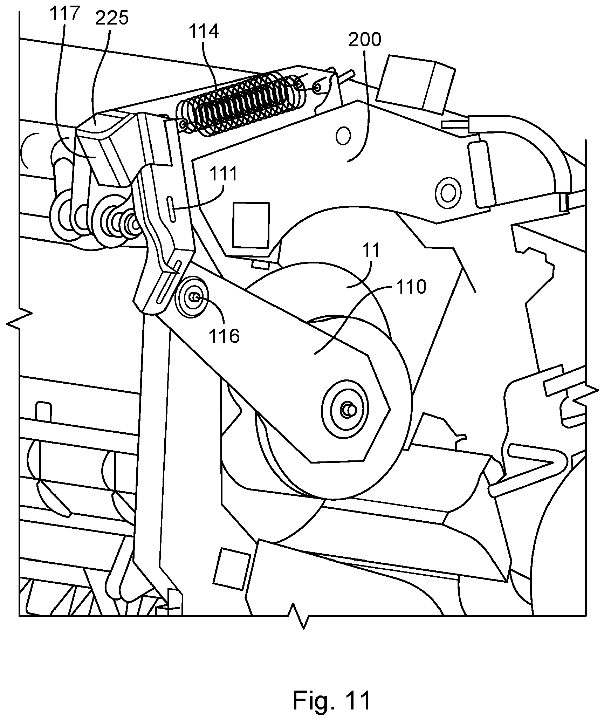

The auger arm 110 and the auger control arm 111 pivot around the same auger pivot axle 116. On the left-hand side of the embodiment shown herein (see Figures, 9, 10, 12), the auger control arm 111 and the auger arm 110 are separately mounted to the same auger pivot axle 116, but at opposite sides of a portion of the pickup assembly frame 200. On the right-hand side (e.g. Figure 11), the auger control arm 111 is directly mounted to the auger arm 110 for pivoting therewith. On the right-hand side, the auger control arm 111 further comprises a wind guard abutment flange 117 for engaging with the auger control arm abutment 228 of the wind guard frame 225 (as in Figure 11). When the wind guard frame 225 is lifted beyond the position shown in Figure 11, it will push against the wind guard abutment flange 117 of the auger control arm 111 and thus raise the feeding auger 11.

In the embodiment shown in these Figures, both ends of the feeding auger 11 comprise an auger control arm 111 that is coupled to the pickup assembly frame 200 via two suspension springs 114. Both auger control arms 111 are configured to get into contact with an auger control arm abutment 228 of the wind guard frame 225 during at least a portion of the pivoting motion of the wind guard assembly 220. Alternatively, the suspension and/or the lifting functionality of the auger control arms 111 may be provided at one end of the pickup assembly 2 only. Similarly, the top stop 112 and bottom stop 113 may both be provided on the pickup assembly frame 200 at either one or both ends of the pickup assembly 2.

### Wind guard lift

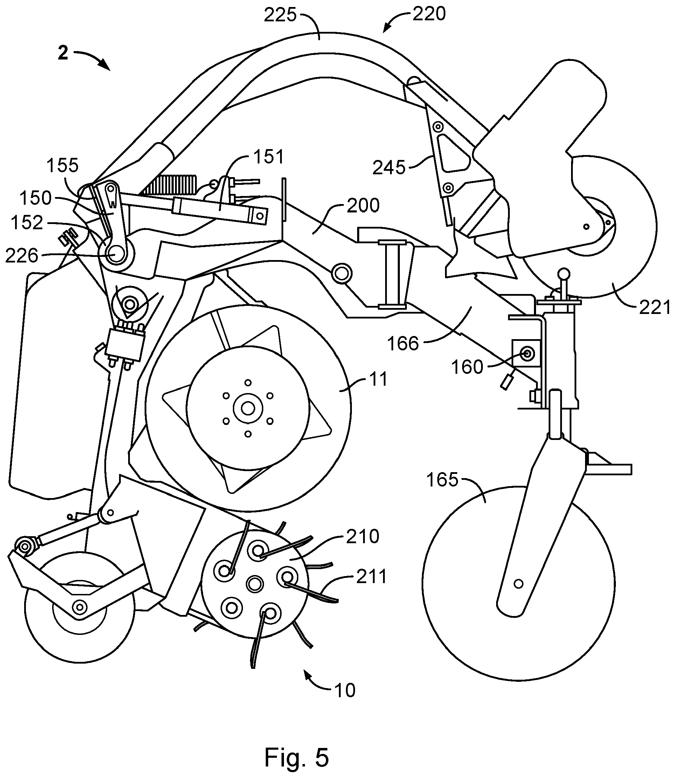

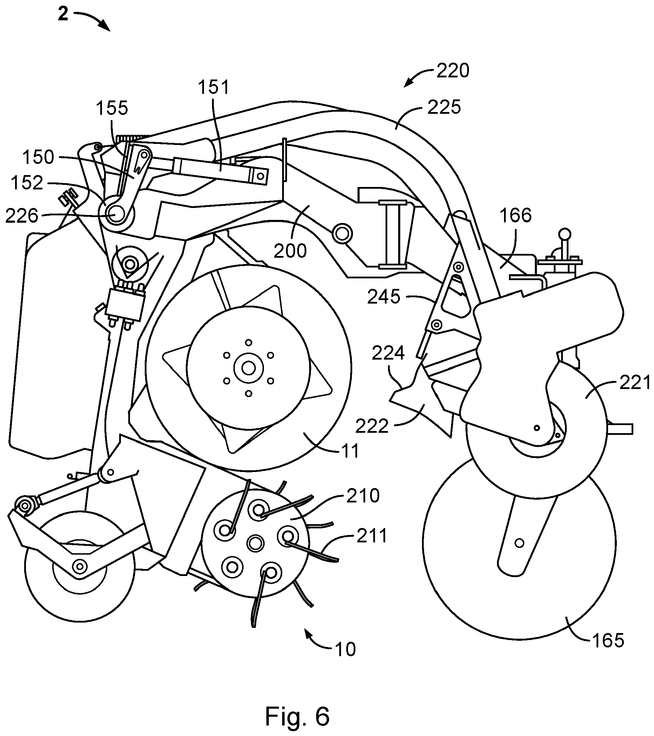

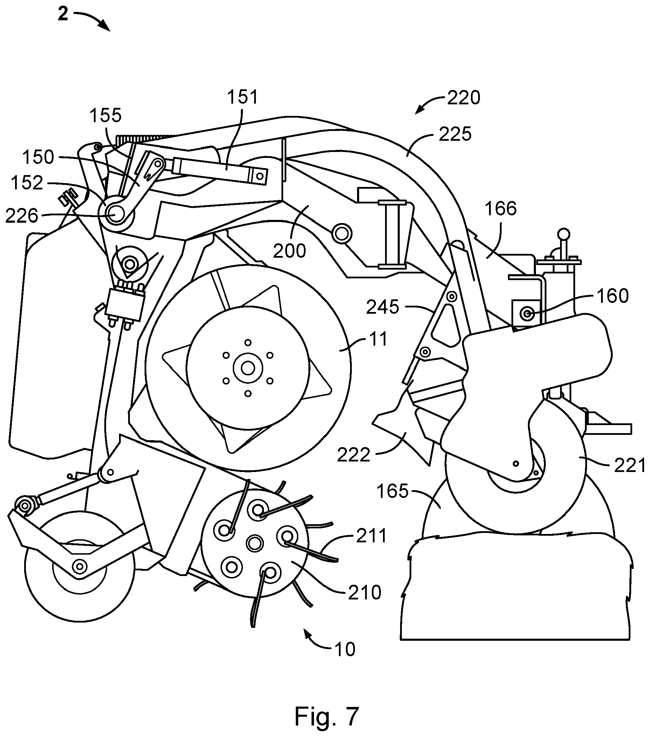

In addition to an improved mechanism for lifting the feeding auger 11, the pickup assembly 2 shown in the Figures comprises an improved mechanism for lifting the wind guard assembly 220 too. This improved wind guard height control mechanism is best explained with reference to Figures 4 to 7. In these drawings, Figure 4 shows the wind guard assembly 220 in a dropped configuration, Figure 5 in a lifted configuration, Figure 6 in an operational configuration at a pre-set minimum height, and Figure 7 in an operational configuration but lifted above its pre-set minimum height by a big lump of crop.

The wind guard height control mechanism comprises a control arm 150, a height control flange 155 and a linear actuator 151. The control arm 150 is pivotably coupled to the pickup assembly frame 200 for pivoting around the wind guard pivot axis 226, coaxially with the wind guard frame 225. The height control flange 155 is provided on the wind guard frame 225 and configured to be in contact with the control arm 150. The linear actuator 151 has a first end connected to the pickup assembly frame 200 and a second end connected to the control arm 150.

The control arm 150 is used to push against the height control flange 155 on the wind guard frame 225 to pivot the wind guard 220 upward. No active control of the wind guard frame 225 is required to let it come down again. When the control arm 150 is located at a height setting that is lower than the current height of the wind guard frame 225, the frame 225 automatically returns to that lower height, for example under the influence of its own weight and/or by a force originating from a suspension system of the wind guard frame 225.

One of the advantages of the wind guard height control mechanism shown here is that the linear actuator 151, e.g. an electronic or hydraulic actuator, does not need to be directly connected to the wind guard frame 225 itself. Because of that, the wind guard frame 225 is free to pivot upward when the swath height increases (as in Figure 7), without there being any need to adjust or control the actuator. When the swath height returns to normal, the wind guard frame 225 will fall back to the previously set minimum height (as in Figures 4 or 6). After the wind guard assembly 220 has been lifted to its maximum height, for example to allow the removal of a stone, the linear actuator 151 can be used to set the new minimum height and the wind guard frame 225 will fall back to exactly the set height.

Preferably, as in the embodiment shown in Figures 4 to 7, the height control flange 155 and the linear actuator 151 are arranged at opposite sides of the control arm 150. The height control flange 155 is arranged rearward of the control arm 150 and the linear actuator 151 is arranged forward of the control arm 150, wherein forward and rearward are defined relative to an intended driving direction of the agricultural harvester 1. This particular arrangement allows the wind guard frame 225 to move up, but not down, independently of the control arm 150, and the control arm 150 to move down independently of the wind guard frame 225. Because the actuator 151 does not need to act against the full weight of the wind guard assembly 220 when setting the minimum height, it is possible to control the minimum height with high accuracy.

In other embodiments, the height control flange 155 may, for example, be held in a slot inside the control arm. In such embodiments the control arm 150 will be able to push the wind guard frame 225 up, but also to pull the wind guard frame 225 down. In some embodiments, the wind guard height control mechanism may further comprise a releasable coupling for connecting the control arm 150 to the height control flange 155. The releasable coupling, when activated, allows the control arm 150 to selectively pull at the wind guard frame 225 during at least a portion of its pivoting motion back to its newly set minimum height. The releasable coupling may, for example, use an electric actuator for engaging and disengaging the coupling when needed, or some elaborate mechanical cam system may be provided that automatically engages and disengages when the wind guard frame 225 is in specific positions. Alternatively, the releasable coupling may comprise an electromagnetic coupling that can be controlled electronically and through control software.

Preferably, the pickup assembly 2 further comprises a controller (not shown), operatively coupled to the linear actuator 151 for adjusting a minimum height setting of the wind guard assembly 220, the minimum height setting lying between a dropped and a lifted configuration of the wind guard assembly 220. The controller may be coupled to control systems of the harvester 1 when the pickup assembly 2 is attached to the harvester 1. Such a coupling may be wired or wireless. The wind guard height control mechanism may further comprise an angle sensor 152, operatively coupled to the controller and configured to measure an angle of rotation of the control arm 150 relative to the wind guard pivot axle, the controller being configured to control the linear actuator 151 in dependence of the angle of rotation of the control arm 150. The angle sensor 152 in such an embodiment will generally allow for more accurate monitoring and control of the wind guard height than sensors that monitor, for example, the extension of a hydraulic cylinder.

The wind guard height control mechanism shown here is provided at the left-hand side of the pickup assembly 2. While this may be sufficient to accurately control the wind guard height, a second identical or similar second wind guard height control mechanism may be provided at the opposite right-hand side of the pickup assembly 2.

### Feeding auger drive

A further improvement of the pickup assembly 2 shown in the Figures is found in a new drive system 300 for driving the feeding auger 11. In contrast with feeding auger drives used for this kind of pickup assemblies 2 in the past, the feeding auger drive 300 of this pickup assembly 2 is a belt drive. The feeding auger drive 300 thus uses a drive belt 301 and pulleys instead of chains, gears, and sprockets.

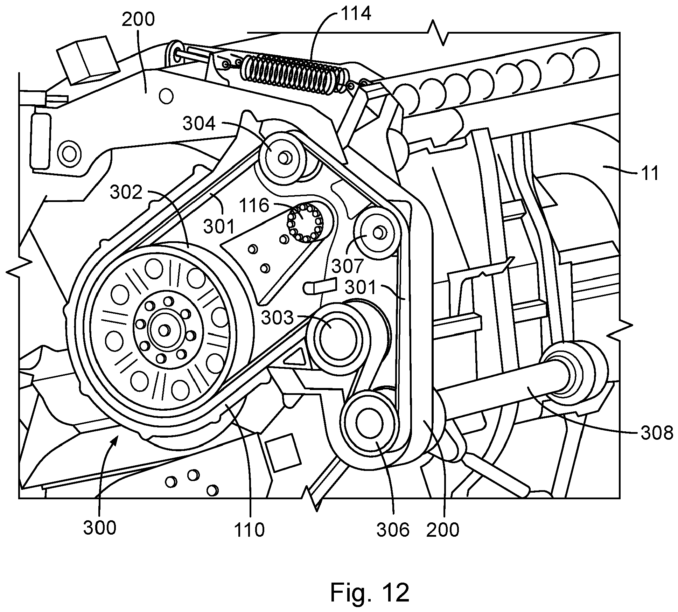

As shown in Figure 2, the feeding auger drive 300 is provided at the left-hand side of the pickup assembly 2. Alternatively, the feeding auger 11 may be driven from the right end or from both ends of the pickup assembly 2. The feeding auger drive 300 is shown in more detail in Figure 12 and from a different perspective in Figures 9 and 10. The feeding auger drive 300 is partly provided inside the pivotable auger arm 110 and partly embedded in, or mounted directly too, the pickup assembly frame 200. As described above, the auger arm 110 is pivotable relative to the pickup assembly frame 200 about an auger pivot axle 116. It is, however, to be noted that the same or a similar belt drive 300 can advantageously be used for feeding augers that are not pivotable relative to the pickup assembly frame 200.

The feeding auger drive 300 comprises an auger pulley 302, mounted to, or inside, the auger arm 110 and defining a rotational axis of the feeding auger 11. A drive pulley 306 is connected to a drive shaft 308 that can, for example, be connected to a PTO (power take-off) of the harvester 1, or to a hydraulic or electric motor. The drive belt 301 couples the drive pulley 306 to the auger pulley 302. Using a belt drive instead of a chain drive for driving the feeding auger 11 brings several advantages, such as reduced service and maintenance requirements, and a less complex design with fewer parts and lower weight.

In preferred embodiments, as in the embodiment shown here, the drive pulley 306 is not coaxial with the auger pivot axle 116 and is rotatably mounted to the pickup assembly frame 200. Located in a lower rear corner of a side panel of the pickup assembly frame 200 the drive pulley 306 can now conveniently be coupled to a rotating shaft coming directly from the PTO. Such a coupling would, for example, be much more difficult to realise in the crowded area near the hinge point 116 of the auger arm 110.

Additionally, the feeding auger drive 300 may comprise at least two idler pulleys 303, 304, both mounted to the pickup assembly frame 200. The idler pulleys 303, 304 function to route the drive belt 301 and to optimise the angle at which the drive belt approaches the auger pulley 302. Because the idler pulleys 303, 304 are mounted on the pickup assembly frame 200, they don't move together with the auger arm 110 and serve as fixed points relative to which the auger arm 110 and the auger pulley 302 can move. In the current example, a first one 303 of the at least two idler pulleys is mounted downstream the drive pulley 306 and upstream the auger pulley 302, and a second one 304 of the at least two idler pulleys is mounted downstream the auger pulley 302 and upstream the drive pulley 306. While the idler pulleys 303, 304 keep their fixed position on the pickup assembly frame 200, the auger pulley 302 and drive belt sections extending between these idler pulleys 303, 304 and the auger pulley 302 pivot around the hinge point 116 of the auger arm 110.

In the preferred arrangement shown in Figure 12, the idler pulleys 303, 304 are arranged such that a first portion of the drive belt 301 between the first idler pulley 303 and the auger pulley 302 is substantially parallel with a second portion of the drive belt 301 between the auger pulley 302 and the second idler pulley 304. Even more preferably, these first and second portions of the drive belt 301 are substantially parallel with a line between the pivot axle 116 and the rotational axis of the feeding auger. In such an arrangement, the auger pulley 302 can pivot around its hinge point 116 and move relative to the two idler pulleys 303, 304 without affecting the length of the first and second portion of the drive belt 301. The optimal belt tension is thus maintained, regardless of the angular position of the auger arm 110. Furthermore, this arrangement ensures that the drive belt 301 only pulls at the auger pulley 302 in the direction of the auger arm 110 and that the force exerted on the auger pulley 302 does not have a component in the direction perpendicular thereto. As a consequence, the drive belt 301 will not cause the auger arm 110 to pivot up or down.

The feeding auger drive 300 may be housed in a substantially closed housing in order to prevent dust, dirt, and crop interfering with the feeding auger drive 300. One frame portion of the substantially closed housing may be arranged inside the pickup assembly frame 200. This frame portion may include the drive pulley 306 and the idler pulleys 303, 304. The auger pulley 302 is contained inside the auger arm 110, the auger arm 110 being arranged to pivot partly inside the frame portion of the substantially closed housing. This arrangement allows the auger arm 110 to move relative to the pickup assembly frame 200 while maintaining the feeding auger drive housing substantially closed.

The feeding auger drive 300 may further comprise a tensioner pulley 307, mounted to the pickup assembly frame 200. The tensioner pulley 307 of this embodiment is comprised in the frame portion of the substantially closed housing that is arranged inside the pickup assembly frame 200. As shown in Figures 9 and 10, the tensioner pulley 307 may be mounted to an arm that can pivot to move the tensioner pulley 307 and lengthen or shorten the trajectory of the drive belt 301. Alternatively, the tensioner pulley 307 may be arranged to move linearly to achieve the same.

Preferably, the drive belt 301 is a synchronous belt that is reinforced with carbon fibres. An important advantage of carbon reinforced belts is that they do not lengthen over time. When such a drive belt 301 is used, the tensioner pulley 307 may only need to be configured once to provide the optimal belt tension during assembly of the feeding auger drive 300. After that, the tensioner pulley 307 may be fully fixed and the auger drive housing can be closed.

### Wind guard shield return surface

As shown in Figure 2, the wind guard assembly 220 comprises a wind guard frame 225 with a top section and a front section, the top section being pivotably coupled to the pickup assembly frame 200, the front section extending downwards from the top section. A wind guard shield 227 is carried by the wind guard frame 225 to cover at least a portion of a top and a front of the pickup assembly 2. While the wind guard assembly 220 shown here comprises a single wind guard shield 227 that covers large parts of both the top and the front of the pickup assembly, alternative wind guard assemblies 220 may use separate wind guard shields for the top and front, or for left, centre, and right sections of the pickup assembly 2. Similarly, the wind guard frame 225 may consist of two or more separate sections.

Additionally, as best viewed in Figures 4 to 7, the wind guard assembly 220 comprises a wind guard shield return surface 245, extending downward and rearward from the front section of the wind guard frame 225. With this wind guard shield return surface 245, the crop falling off the wrong side of the feeding auger 11 is effectively guided in the direction of the pickup unit 10 where it can be picked up and passed on, back to the feeding auger 11. This avoids the crop material falling back on the ground or accumulating on top of, for example, the wind guard roller 221 or the support arm for the guidance plate 222. If crop were to accumulate on top of the wind guard roller 221, this could partially block the rotation of this roller 221 and therewith severely hamper the continued and consistent intake of crop by the pickup assembly 2. By arranging the wind guard shield return surface 245 in such a way that the crop cannot fall onto the wind guard roller 221, this can be avoided.

The wind guard shield return surface 245 may comprise a plate or mesh surface. A mesh surface may bring the advantages of being light weight and less prone to catch wind, but it may also catch more crop and dust that could accumulate on its surface. The pickup assembly 2 may further comprise a guidance plate 222 as described above. When the wind guard shield return surface 245 and the return guide surface 224 of the guidance plate 222 are positioned in line, the crop falling off the wrong side of the feeding auger 11 will not get a chance of accumulating on top of or behind the guidance plate 222 and will effectively be led back to the pickup unit 10.

The guidance plate 222 may be pivotable about a pivot axis that is coaxial with a rotational axis of the wind guard roller 221. In that case, the guidance plate 222 is preferably arranged as in figures 4 to 7, with a smooth transition between the wind guard shield return surface 245 and the return guide surface 224 of the guidance plate 222. To this end, at least a portion of the return guide surface 224 may be situated below the wind guard shield return surface 245 to avoid any gap opening up between the two when the guidance plate 222 is rotated to its downmost position.

The feeding auger 11 may be movably mounted to the pickup assembly frame 200 and configured to move to and from the pickup unit 10. The wind guard shield return surface is preferably arranged in such a way that a distance between the feeding auger 11 and the wind guard shield return surface 245 remains substantially the same regardless of the position of the feeding auger 11. Substantially the same is herein to be understood as not varying by more than about, for example, 50%, 40%, 30%, 20%, or 10%. The distance between the feeding auger 11 and the wind guard shield return surface 245 may, for example be kept substantially constant by ensuring that the wind guard shield return surface 245 is substantially parallel to the trajectory of movement of the circumference of the feeding auger 11. It is noted that, while the feeding auger 11 may make a pivoting motion, it will only be able to pivot over a limited range of angles and the actual trajectory of movement of the circumference of the feeding auger 11 may be approximated by a more or less straight line.

Optionally, the pickup assembly 2 further comprises an actuator for adjusting an orientation or position of the wind guard shield return surface 245. Such adjustments may be used to ensure that the wind guard shield return surface 245 remains properly aligned with, e.g., the return guide surface 224 of the guidance plate 222 and/or that the distance to the feeding auger 11 is kept substantially constant.

### Wind guard lock

Modern pickup assemblies 2 as shown in the drawings can be large and the wind guard frame 225 can be heavy. In order to remove unwanted objects from the pickup assembly 2, the operator needs to stand below the lifted heavy wind guard frame 225. Typically, a heavy wind guard roller 221, spanning the full with of the wind guard frame 225 hangs above the operator's head while looking for and taking out the unwanted object. To ensure the safety of the operator, a mechanical safety latch is usually provided to prevent the wind guard frame 225 from coming down while the operator is standing underneath. However, if the operator forgets to activate the safety latch, or if the wind guard assembly 220 is lowered after the safety latch is deactivated but before the operator has moved away from the pickup assembly, a significant risk of serious injury remains.

To reduce this risk, the pickup assembly may additionally be supplied with a lock switch 160 (see, e.g., Figures 2 and 4) and an electronic circuit (not shown), operatively coupled to the lock switch 160 and the actuator 151 for raising and lowering the wind guard assembly 220. The electronic circuit is configured to block control instructions from reaching the actuator 151 when the lock switch 160 is in an activated state and to allow control instructions to reach the actuator 151 when the lock switch is in a deactivated state.

Instead of needing to activate a mechanical safety latch, the operator only needs to operate the lock switch 160 to ensure that wind guard assembly 220 is not lowered while he (or she) is standing underneath. Because the lock switch 161 does not require the operator to mechanically block the wind guard frame 225 itself, it may already be activated before the operator has moved into the area underneath the wind guard frame 225. This further adds to the improved safety of the pickup assembly 2.

When the actuator 151 for operating the height of the wind guard frame 225 is an electric actuator, it is operatively coupled to the electronic circuit such that no electric signal can reach the electric actuator 151 when the lock switch 160 is in the activated state. In other embodiments, the actuator 151 may be a hydraulic cylinder controllable with an electrohydraulic valve, the electrohydraulic valve being operatively coupled to the electronic circuit such that no electric signal can reach the electrohydraulic valve when the lock switch 160 is in the activated state. If the valve is in a normally closed setting, blocking all electronic signals from reaching that valve will not only block the actuator 151 electronically, but also physically, thereby further adding to the safety of the pickup assembly 2.

Optionally, the electronic circuit is further configured to block control instructions from reaching the pickup unit 10 and/or the feeding auger 11 when the lock switch 160 is in the activated state. One of the advantages of the lock switch 160 according to the invention is that a single switch can be used to deactivate multiple functional units. The mechanical safety latches known from the prior art block movement of the wind guard frame 225 only and require separate additional locks for blocking the pickup unit 10 and the feeding auger 11 too.

Preferably, the lock switch 160 is arranged near a lateral end of the pickup assembly 2, thereby making it impossible, or at least impractical, to reach it when standing under the wind guard assembly 220. Consequently, the risk is reduced that a second operator, staying behind in the cabin of the agricultural harvester 1, lowers the wind guard assembly 220 before the first operator has moved into a safe position. Preferably, the lock switch 160 is arranged such that it is completely out of reach for a person standing under the wind guard frame 225 when in its lifted configuration. In some embodiments, the pickup assembly 2 may further comprise two gauge wheels 165 carried by respective gauge wheel arms 166, pivotably supported at respective lateral ends of the pickup assembly frame 200, and the lock switch 160 is arranged on one of the gauge wheel arms 166. The gauge wheel arm 166 may be pivoted outward when the wind guard assembly 220 is raised to ensure a proper distance between the lock switch 160 and the wind guard assembly 220.

### Wind guard work lights

When harvesting at night, or in otherwise dark conditions, it may not always be easy for the operator to find and remove unwanted objects that get stuck inside the pickup assembly 2. When working at night, lighting on the harvester 1 is normally used to allow the operator to observe the field around the harvester 1 and in front of the header or pickup assembly 2. When raising the wind guard assembly 220 for the removal of an unwanted object from inside the pickup assembly 2, the wind guard assembly 220 may, however, block the light coming from the harvester 1, thereby making it difficult for the operator to find and take out the object he (or she) wants to remove.

To allow the operator to properly inspect the relevant inner areas of the pickup assembly 2, at least one work light 170 (see Figure 2) is arranged to illuminate an internal area of the pickup assembly 2 underneath the wind guard frame 225 when the wind guard frame 225 is in its lifted configuration. Such internal areas may, for example, include an area between the feeding auger 11 and the crop inlet of the harvester 1, an area between the pickup unit 10 and the feeding auger 11, or other areas where unwanted objects may be caught up. By specifically illuminating these areas it is thus made easier to remove the unwanted objects.

Optionally, the work light 170 is arranged to illuminate the pickup unit 10 only when the wind guard frame 225 is in its lifted configuration. The work light 170 may, for example, be turned on by a switch that is operated by the lifting of the wind guard frame 225 beyond a certain height. In some embodiments, the pickup assembly 2 may further comprise a lift sensor for detecting when the wind guard frame 225 is lifted to the lifted configuration, and an electronic circuit operatively coupled to the lift sensor and the work light and configured to turn on the work light 170 in dependence of an electric signal from the lift sensor. Alternatively, or additionally, a control algorithm programmed for lifting the wind guard to its lifted configuration comprises a step of turning on the work light 170. Similarly, the work light 170 may be turned off automatically as soon as the wind guard frame 225 is dropped back to an operational configuration.

The work light 170 may, for example, be mounted to the wind guard assembly 220. For example, the work light 170 comprises a lighting strip extending along a width of the wind guard assembly 220. Alternatively, the work light is mounted to the pickup assembly frame 200.

Advantageously, the operation of the work light 170 is coupled to activation of the lock switch 160. The electronic circuit may thus be configured to turn on the at least one working light 170 when the lock switch 160 is brought into the activated state. When operating in the dark this coupling brings the additional advantage that the operator will not forget to activate the lock switch 160, because he needs the work lights 170 to be turned on to be able to find and remove the unwanted object. Optionally, the electronic circuit is further configured to turn off the working light 170 when the lock switch 160 is brought into the deactivated state.

## Claims

1. A pickup assembly (2) for an agricultural harvester (1), the pickup assembly (2) comprising:
- a pickup assembly frame (200),
- a pickup unit (10) carried by the pickup assembly frame (200) and configured to pick up crop from a field,
- a feeding auger (11), configured to receive the crop from the pickup unit and feed the crop towards a crop inlet of the agricultural harvester (1),
- a wind guard assembly (220), comprising a wind guard frame (225) and a wind guard lifting mechanism coupled to the pickup assembly frame (200) and the wind guard frame (225) and configured for lifting the wind guard frame (225) from an operational configuration to a lifted configuration,
- at least one work light (170), arranged to illuminate an internal area of the pickup assembly (2) underneath the wind guard frame (225) when the wind guard frame (225) is in the lifted configuration.

2. A pickup assembly (2) as claimed in claim 1, wherein the work light (170) is arranged to illuminate the pickup unit (10) only when the wind guard frame (225) is in the lifted configuration.

3. A pickup assembly (2) as claimed in claim 1 or 2, further comprising a lift sensor for detecting when the wind guard frame (225) is lifted to the lifted configuration, and an electronic circuit operatively coupled to the lift sensor and the work light (170) and configured to turn on the work light (170) in dependence of an electric signal from the lift sensor.

4. A pickup assembly (2) as claimed in claim 3, wherein the electronic circuit is further configured to turn off the work light (170) in dependence of an electric signal from the lift sensor.

5. A pickup assembly (2) as claimed in any preceding claim, wherein the work light (170) is arranged to illuminate an area between the feeding auger (11) and a crop inlet of the agricultural harvester (1) when the wind guard frame (170) is in its lifted configuration.

6. A pickup assembly (2) as claimed in any preceding claim, wherein the work light (170) is mounted to the wind guard assembly (220).

7. A pickup assembly (2) as claimed in any preceding claim, wherein the work light (170) comprises a lighting strip extending along a width of the wind guard assembly (220).

8. A pickup assembly (2) as claimed in any preceding claim, wherein the work light (170) is mounted to the pickup assembly frame (200).

9. An agricultural harvester (1) comprising a pickup assembly (2) as claimed in any preceding claim.
